# EUROPÄISCHE PATENTSCHRIFT

(11) **EP 1 688 474 B1**
(45) Veröffentlichungstag und Bekanntmachung des Hinweises auf die Patenterteilung: **07.12.2016**
(21) Anmeldenummer: 06000703.6
(22) Anmeldetag: 13.01.2006
(51) Int. Cl.: C10L 1/04, C10G 31/06, C01B 3/34

(54) **Verfahren zur Aufarbeitung von Kraftstoff**
Process for the processing of fuel
Procédé de traitement de carburants

(30) Priorität: 04.02.2005 DE 102005005118
(43) Veröffentlichungstag der Anmeldung: 09.08.2006
(73) Patentinhaber: Forschungszentrum Jülich GmbH, 52425 Jülich (DE)
(72) Erfinder: Peters, Ralf, 52146 Würselen (DE); Dahl, Rudolf, 52428 Jülich (DE); Samsun, Remzi Can, 52074 Aachen (DE); Pasel, Joachim, 52428 Jülich (DE); Stolten, Detlef, 52076 Aachen (DE)

(56) Entgegenhaltungen:
- EP-A- 1 258 453
- DE-C1- 10 018 792

## Beschreibung

Die Erfindung betrifft ein Verfahren zur Aufarbeitung von Kraftstoff, insbesondere zur Abtrennung schwer flüchtiger Bestandteile aus einem Kraftstoff, wie beispielsweise Diesel oder Kerosin. Das Verfahren ist zum Einsatz in einem Reformer, bzw. vor einem Reformationsschritt geeignet.

### Stand der Technik

Neben der klassischen Dampfreformierung zur Wasserstoffproduktion stellt die autotherme Reformierung eine viel versprechende Alternative dar. Dabei reagiert ein Sauerstoff-Wasser-Gemisch im Reaktor ohne externe Wärmequelle mit Kohlenwasserstoff CₙHₘ entsprechend der folgenden Gleichungen:

CₙHₘ + n H₂O → n CO + (m/2 + n) H₂ ΔH_{R} > 0 (1)

(Dampfreformierung)

CₙHₘ + n/2 O2 → n CO + m/2 H₂ ΔH_{R} < 0 (2)

(partielle Oxidation)

Für Methan CH₄ (n = 1, m = 4) stellen sich die Reaktionsgleichungen wie folgt:

CH₄ + H₂O → CO + 3H₂ ΔH_{R} = + 206 kJ/mol (3)

(Dampfreformierung)

CH₄ + 0,5 O₂ → CO + 2H₂ ΔH_{R} = - 35 kJ/mol (4)

(partielle Oxidation)

Der Sauerstoff als Oxidationsmittel wird in der Regel mittels Luft bereitgestellt. Die Wärme, die für die Dampfreformierung notwendig ist, wird durch die partielle Oxidation des Kohlenwasserstoffs zur Verfügung gestellt. Der Prozess kann somit in einem autothermen Betriebsmodus gefahren werden.

Neben der Entwicklung von geeigneten Katalysatoren für die autotherme Reformierung von Mitteldestillaten hängt die Einsatzfähigkeit eines Reformers wesentlich davon ab, ob optimierte Betriebsbedingungen eingestellt werden können. Die Reformierung von flüssigen Kraftstoffen stellt hohe Ansprüche an die Vorbereitung der Edukte, bevor sie in die Reaktionszone des Reaktors, d. h. des Reformers eintreten.

Eine schlechte Qualität des Eduktgemisches hat regelmäßig eine negative Wirkung auf die Umsatzrate des Kraftstoffs. Um die Rußbildung und sogenannte "Hot Spots" in der Reaktionszone zu vermeiden, ist es insbesondere wichtig, dass die O₂/C und H₂O/C-Verhältnisse im Gemisch möglichst konstant bleiben und nicht schwanken.

Aus dem Stand der Technik sind zwei prinzipielle Möglichkeiten der Kraftstoffzuführung bekannt, die gasförmige Zuführung über einen externen Verdampfer und die interne Einspritzung und Zerstäubung des flüssigen Kraftstoffs.

Eine separate Verdampfung des Kraftstoffs wird dabei häufig bei reinen Stoffen, wie beispielsweise Methanol oder isoOktan angewandt. Nachteilig wird bei diesen Verfahren eine zusätzliche externe Wärmequelle benötigt und die Steuerung gestaltet sich aufgrund der Wärmekapazität des Verdampfers regelmäßig schwierig.

Kraftstoffe wie Diesel oder Kerosin sind eine Mischung aus mehreren Verbindungen mit verschiedenen Siedepunkten. Dies erschwert die vollständige Verdampfung solcher Kraftstoffe.

Bei dem Einsatz komplexerer Kraftstoffmischungen, wie Benzin oder Diesel steigt die Gefahr, dass sich auf der heißen Oberfläche des Verdampfers kohlenstoffhaltige Ablagerungen bilden und abscheiden. Pyrolyse ist ein möglicher Mechanismus dafür. Analysen ergeben, dass Mitteldestillate, wie Diesel oder Kerosin, in der Regel einen Anteil von ca. 0,5 bis 5 Gew.-% schwer oder nicht flüchtige Bestandteile enthalten. Dieser Anteil besteht wesentlich aus polyzyklischen aromatischen Kohlenwasserstoffen und Kohlenwasserstoffen mit höheren Kohlenstoffzahlen. Durch die unvollständige Zersetzung des Kraftstoffs im Reformer treten somit nachteilig kohlenstoffhaltige Ablagerungen auf, die sich nicht nur auf den Einlassdüsen, sondern insbesondere auch auf dem Reformierungskatalysator in Form von Ruß abscheiden und so zu einer verringerten Aktivität desselben führen.

EP-A-1 258 453 offenbart ein Verfahren zum Reformieren von Dieselkraftstoff, umfassend die fraktionierte Destillation von Dieselkraftstoff in einen leichter siedenden und einen schweren siedenden Teilstrom, und das Reformieren des leichter siedenden Teilstroms in einem Reformierreaktor zur Erzeugung eines Reformats. Der schwerer siedende Anteil kann in einem Brenner zur Erzeugung von Wärmeenergie verbrannt werden. Der schwerer siedende Anteil kann damit zur Erwärmung verschiedener Systemkomponenten verwendet werden.

DE-C-100 18 792 offenbart ein Verfahren zur Schadstoffreduktion von Abgasen von Verbrennungsmotoren, innerhalb dessen von einem Kraftstoffanteil leichtsiedende Komponenten durch Siedepunktfraktionieren abgetrennt und verdampft werden, bevor in einem nachfolgenden Schritt nur aus diesen abgetrennten Komponenten Wasserstoff bzw. Kohlenmonoxid erzeugt werden, die einem Katalysator zugeführt werden, am dem Schadstoffe, insbesondere Stickoxide und Rußpartikel, reduziert werden. Die Fraktioniereinrichtung umfasst eine Heizvorrichtung, die als Wärmetauscher ausgebildet sein kann, der die Abwärme des Motors nutzt.

### Aufgabe und Lösung

Die Aufgabe der Erfindung ist es, ein Verfahren für die autotherme Reformierung bereit zu stellen, mit dem komplexe Kraftstoffe, wie beispielsweise Diesel oder Kerosin, vollständig verdampft werden können, so dass sich vorteilhaft ein Reformationsschritt anschließen kann, bei dem eine vollständige Zersetzung des Kraftstoffs erfolgen kann.

Die Aufgaben der Erfindung werden gelöst durch ein Verfahren zur Abtrennung von schwer flüchtigen Bestandteilen aus einem komplexen Kraftstoff mit der Gesamtheit an Merkmalen gemäß Hauptanspruch. Vorteilhafte Ausführungsformen des Verfahrens finden sich in den jeweils darauf rückbezogenen Ansprüchen wieder.

### Gegenstand der Erfindung

Die Grundidee der Erfindung ist es, einen komplexen Kraftstoff, der wie Diesel oder Kerosin einen nicht unerheblichen Anteil an schwer flüchtigen Bestandteilen aufweist, vor Eintritt in den Reformer derart aufzubereiten, dass innerhalb des Reformers eine vollständige Verdampfung des zugeführten Kraftstoffs ermöglicht wird. Als schwer flüchtige Verbindungen werden im Rahmen dieser Erfindung alle organischen Verbindungen in einem Siedebereich oberhalb von 300 - 350°C bezeichnet.

Dazu wird der Kraftstoff erfindungsgemäß einem Brenner/Verdampfer zugeführt, in dem der komplexe Kraftstoff nahezu vollständig verdampft wird. Dies erfolgt üblicherweise bei Temperaturen zwischen 300 °C und 410 °C. Der überwiegend gasförmige Kraftstoff wird zusammen mit den schwer flüchtigen Anteilen bzw. mit den flüssigen, nicht verdampften Anteilen einem Separator zugeführt, in dem die schwer flüchtigen Bestandteile abgetrennt werden. Der gasförmige Kraftstoff kann dann direkt oder wieder auskondensiert als Flüssigkeit dem Reformer zugeführt werden.

Die für den Brenner/Verdampfer benötigte Energie wird aus den abgetrennten schwer flüchtigen Bestandteilen gewonnen, indem diese als Brennstoff in dem Brenner zusammen mit einem Oxidationsmittel, insbesondere Luft, verbrannt werden. Die Verbrennungswärme dieser Anteile reicht regelmäßig aus, um im stationären Betriebszustand den gesamten, regelmäßig bei Raumtemperatur vorliegenden, in den Brenner/Verdampfer eintretenden Kraftstoff auf Temperaturen bis oberhalb von 300 °C zu erhitzen, und somit nahezu vollständig zu verdampfen. Die Eintrittstemperatur des Kraftstoffes liegt dabei immer niedriger als die Austrittstemperatur aus dem beschriebenen Apparat. Die maximale Temperatur kann dabei auf die gegebenenfalls nachfolgende Reformation des Kraftstoffs abgestimmt werden.

Das Verfahren weist den Vorteil auf, dass auf diese Weise dem Reformer Kraftstoff zugeführt werden kann, der immer vollständig im Reformer ungesetzt werden kann, und somit die Gefahr einer Katalysatorvergiftung ausschließt. Die autotherme Reformierung kann somit vorteilhaft auch mit Kraftstoffen mit unterschiedlicher oder schwankender Qualität betrieben werden. Durch die Ausnutzung des Brennwertes des abgetrennten Anteils ist das Verfahren auch energetisch betrachtet interessant.

### Spezieller Beschreibungsteil

Nachfolgend wird der Gegenstand der Erfindung anhand zweier Figuren näher erläutert, ohne dass der Gegenstand der Erfindung dadurch beschränkt wird. Es zeigen die
- Figur 1:: Schema der erfindungsgemäßen Aufarbeitung für flüssigen Diesel.
- Figur 2:: Schema der erfindungsgemäßen Aufarbeitung für flüssiges Kerosin.

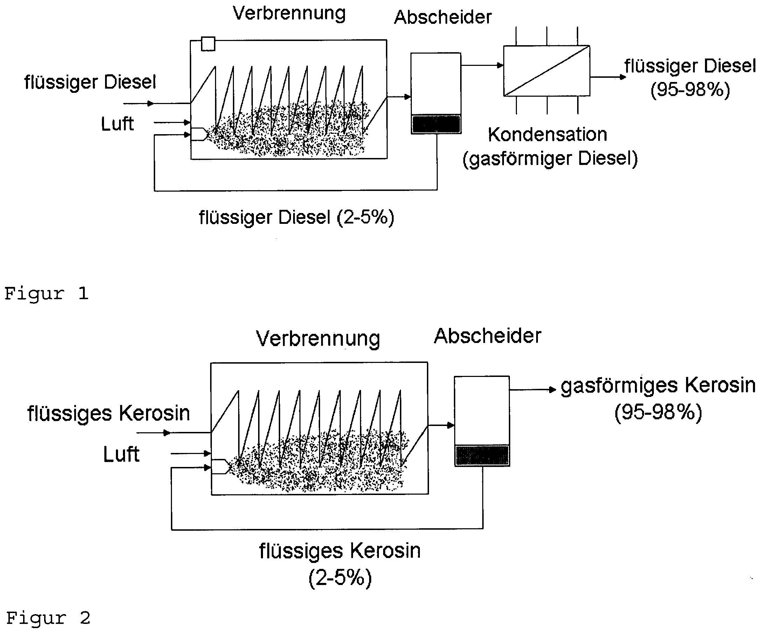

In Figur 1 wird flüssiger Diesel in einem Brenner/Verdampfer, der als ein Wärmetauscher ausgestaltet ist, auf Temperaturen von 300 bis 410 °C aufgeheizt. Dabei gehen die leicht flüchtigen Bestandteile in die Gasphase über, während die schwer flüchtigen Bestandteile des Kraftstoffs, die bei diesen Temperaturen regelmäßig nicht verdampfen, weiterhin in flüssiger Form vorliegen. Dieses 2-Phasengemisch wird einer Trenneinrichtung (Separator) zugeführt, in den die gasförmigen von den schwer flüchtigen, flüssigen Bestandteilen getrennt werden. Während der gasförmige Kraftstoff für die weitere Verwendung vorteilhaft in einem Kondensator zu flüssigem Diesel kondensiert wird, werden die schwer flüchtigen, flüssigen Bestandteile zusammen mit Luft in dem Brenner/Verdampfer verbrannt. Die dabei entstehende Wärme wird vollständig auf den hier eingeleiteten Kraftstoff übertragen.

In der Figur 2 ist ein analoges Schema für flüssiges Kerosin als komplexen Kraftstoff zu sehen. Der einzige Unterschied in der Prozessführung zum flüssigen Diesel (Figur 1) liegt darin, dass die leicht flüchtigen Bestandteile des Kerosins nach dem Trennschritt im Separator nicht unbedingt weiter verflüssigt werden, sondern direkt als gasförmiges Kerosin weiterverwendet werden können.

## Patentansprüche

1. Verfahren zum Abtrennen schwer flüchtiger Bestandteile aus einem flüssigen Kraftstoff, für den Einsatz in einem Reformer mit den Schritten
- der flüssige Kraftstoff mit einem Anteil von 2 bis 5 Gew.-% an schwer flüchtigen Bestandteilen, die einen Siedepunkt oberhalb von 300 °C aufweisen, wird in einem als Wärmeaustauscher ausgestalteten Brenner/Verdampfer auf Temperaturen zwischen 300 und 410 °C erhitzt, wobei die bei dieser Temperatur flüchtigen Bestandteile vollständig verdampfen,
- der Anteil an verdampftem Kraftstoff wird zusammen mit dem Anteil an nicht verdampften Bestandteilen des Kraftstoffs einem Separator zugeführt, in dem der Anteil an nicht verdampften Bestandteilen des Kraftstoffs abgetrennt wird,
- der abgetrennte Anteil an nicht verdampften Bestandteilen des Kraftstoffs wird zumindest teilweise zusammen mit einem Oxidationsmittel verbrannt, wobei die dadurch entstehende Wärme dem Brenner/Verdampfer zugeführt wird.

2. Verfahren nach Anspruch 1, bei dem der Anteil an verdampftem Kraftstoff durch einen Kondensationsschritt verflüssigt wird.

3. Verfahren nach einem der Ansprüche 1 bis 2, bei dem die Wärme durch die Verbrennung des Anteil an nicht verdampfte Bestandteilen des Kraftstoffs über einen Wärmetausch auf den in den Brenner/Verdampfer eingeleiteten Kraftstoff übertragen wird.

4. Verfahren nach Anspruch 1 bis 3 bei dem der gesamte abgetrennte Anteil an nicht verdampften Bestandteilen des Kraftstoffs mit einem Oxidationsmittel verbrannt wird und die dadurch entstehende Wärme dem Brenner/Verdampfer zugeführt wird.

5. Verfahren nach Anspruch 1 bis 4, bei dem flüssiger Diesel oder flüssiges Kerosin als flüssiger Kraftstoff eingesetzt werden.

## Claims

1. Method for burning off non-volatile components from a liquid fuel for use in a reformer with the steps
- the liquid fuel with a proportion of 2 to 5% by weight of non-volatile components, which have a boiling point above 300° C, is heated to temperatures of between 300 und 410° in a burner/evaporator made as a heat exchanger, in which the components that are volatile at this temperature evaporate completely,
- the proportion of evaporated fuel is taken to a separator together with the proportion of non-evaporated components of the fuel, in which the proportion of non-evaporated components of the fuel is burnt off,
- the separated proportion of non-evaporated components of the fuel is burnt at least partly together with an oxidising agent, in which the heat arising through this is taken to the burner/evaporator.

2. Method according to claim 1, in which the proportion of evaporated fuel is liquefied by a condensation step.

3. Method according to one of claims 1 to 2, in which the heat is transferred through a heat exchange to the fuel introduced into the burner/evaporator through combustion of the proportion of non-evaporated components of the fuel.

4. Method according to claim 1 to 3, in which the whole of the separated proportion of non-evaporated components of the fuel is burnt with an oxidising agent and the heat arising through this is taken to the burner/evaporator.

5. Method according to claim 1 to 4, in which liquid diesel or liquid kerosene is used as liquid fuel

## Revendications

1. Procédé servant à séparer des composants fortement volatiles composés d'un carburant liquide, pour l'utilisation dans un reformeur, comprenant les étapes suivantes
- le carburant liquide comprenant une proportion allant de 2 à 5 % en poids de composants fortement volatiles, qui présentent un point d'ébullition supérieur à 300 °C, est chauffé, dans un brûleur/évaporateur configuré sous la forme d'un échangeur de chaleur, à des températures comprises entre 300 et 410 °C, dans lequel les composants volatiles à cette température s'évaporent en totalité,
- la proportion en carburant évaporé est amenée, conjointement avec la proportion en composants non évaporés du carburant, à un séparateur, dans lequel la proportion en composants non évaporés du carburant est séparée,
- la proportion séparée en composants non évaporés du carburant est brûlée au moins en partie conjointement avec un agent d'oxydation, dans lequel la chaleur en résultant est amenée au brûleur/à l'évaporateur.

2. Procédé selon la revendication 1, selon lequel la proportion en carburant évaporé est liquéfiée par une étape de condensation.

3. Procédé selon l'une quelconque des revendications 1 à 2, selon lequel la chaleur est transmise, du fait de la combustion de la proportion de composants non évaporés du carburant, par l'intermédiaire d'un échange de chaleur, sur le carburant introduit dans le brûleur/l'évaporateur.

4. Procédé selon la revendication 1 à 3, selon lequel la totalité de la proportion séparée de composants non évaporés du carburant est brûlée avec un agent d'oxydation et la chaleur en résultant est amenée au brûleur/à l'évaporateur.

5. Procédé selon la revendication 1 à 4, selon lequel du diesel liquide ou du kérosène liquide sont utilisés en tant que carburant liquide.
